# EUROPÄISCHE PATENTSCHRIFT

(11) **EP 3 875 564 B1**
(45) Veröffentlichungstag und Bekanntmachung des Hinweises auf die Patenterteilung: **20.11.2024**
(21) Anmeldenummer: 21160797.3
(22) Anmeldetag: 04.03.2021
(51) Int. Cl.: C10B 1/04, C10B 49/06

(54) **PYROLYTISCHE GASERZEUGUNGSVORRICHTUNG ZUR ERZEUGUNG VON SYNTHESEGAS AUS EINEM VERKOHLBAREN AUSGANGSSTOFF**
PYROLYTIC GAS GENERATING DEVICE FOR GENERATING SYNTHESIS GAS FROM A CARBONIZABLE FEEDSTOCK
DISPOSITIF DE GÉNÉRATION DE GAZ PYROLYTIQUE PERMETTANT DE GÉNÉRER DU GAZ DE SYNTHÈSE À PARTIR D'UNE MATIÈRE DE DÉPART CARBONISABLE

(30) Priorität: 05.03.2020 DE 102020106056
(43) Veröffentlichungstag der Anmeldung: 08.09.2021
(73) Patentinhaber: Abeler, Albert, 48356 Nordwalde (DE)
(72) Erfinder: Abeler, Albert, 48356 Nordwalde (DE)
(74) Vertreter: Tarvenkorn, Oliver

(56) Entgegenhaltungen:
- WO-A1-2015/162338
- DE-A1- 3 213 578
- GB-A- 745 808

## Beschreibung

Die Erfindung betrifft eine pyrolytische Gaserzeugungsvorrichtung zur Erzeugung von Synthesegas aus einem verkohlbaren Ausgangsstoff mit den Merkmalen des Oberbegriffs des Anspruchs 1.

Holzvergaser und andere Biomassevergasungseinrichtungen sind in vielfältiger Weise bekannt. Ein organischer Ausgangsstoff, der in fester Form vorliegt oder einen wesentlichen Anteil an Feststoffen besitzt, wird in ein Synthesegas umgewandelt. Dazu muss eine starke Erwärmung unter gleichzeitiger Abschirmung von Sauerstoff vorgenommen werden, um eine offene Verbrennung zu vermeiden. Bekannte Gaserzeugungsvorrichtungen sind oft kompliziert aufgebaut und eignen sich nicht für eine dezentrale Nutzung. Allein die Tatsache, dass viele Vergaserkonzepte die Prozessstufen übereinander anordnen, führt zu einer großen Anlagenhöhe, für die entsprechend hohe Gebäude oder Unterstände erforderlich sind.

Bekannt ist auch, Klärschlämme zu vergasen, z. B. aus der DE 20 2017 002 898 U1. Zum Betrieb ist aber eine Vortrocknung erforderlich, die über externe Energiequellen vorgenommen werden muss.

DE 10 2016 121 046 B4 zeigt eine zweistufigen Vergaseranlage. Eine horizontale Einheit mit einer Förderschnecke dient als Hauptvergaser. Ein vertikaler Behälter bildet einen Nebenvergaser. Eine Verbindung zwischen Haupt- und Nebenvergaser besteht nur über eine Schwelgasleitung, ohne dass ein Feststofftransport möglich ist. Der Feststoff muss somit in der ersten Stufe vollständig umgesetzt werden. Eine Nutzung der Abwärme aus dem Nebenvergaser für die erste Prozessstufe ist nicht vorgesehen. Außerdem ist der Vergaser sehr komplex aufgebaut.

Bei einem Vergaser, der in DE 10 2006 017 511 A1 beschrieben ist, wird das zu vergasende Gut von oben in einen vertikalen Vergaserschacht eingebracht. Die für den Syntheseprozess notwendige Frischluft wird seitlich durch eine Öffnung im Mantel des Vergaserschachts eingeleitet. Nachteilig ist, dass der aufgegebene Feststoff nur durch Strahlungswärme der massiv ausgemauerten Wände des Vergaserschachts erwärmt werden kann. Die massive Bauweise erfordert einen Aufbau vor Ort und verhindert eine mobile Nutzung.

GB 745808A beschreibt eine gattungsgemäße Gaserzeugungsvorrichtung. Diese besitzt einen vertikal ausgerichteten Vergaserschacht mit rechteckigem Querschnitt, und eine Zellradschleuse darunter. Innerhalb des Vergaserschachtes ist die Gasführung uneinheitlich, d. h. im oberen Teil erfolgt die Strömung von rechts nach links und im unteren Teil von links nach rechts.

DE 3213578A1 bezieht sich auf eine für die Ölschieferaufbereitung geeignete Vorrichtung, für die nicht ersichtlich ist, ob sie dafür geeignet sein kann, einen verkohlbaren Ausgangsstoff zu behandeln und dabei Synthesegas zu erzeugen.

WO 2015162338A1 offenbart ein sauerstofffreies Hochtemperatur-Trocknungsverfahren, bei dem aber eben keine thermo-chemischen Umwandlungsprozesse stattfinden. Damit ist die offenbarte Vorrichtung nicht für den Zweck der Gaserzeugung vorgesehen und geeignet. Die Strömungsrichtung durch den Reaktor ist uneinheitlich. Es ist eine zwangsgeführte Strömung durch den Einsatz von Ventilatoren vorgesehen.

Die Aufgabe der Erfindung besteht somit darin, eine pyrolytische Gaserzeugungsvorrichtung zu schaffen, die einfach aufgebaut und einfach zu betreiben ist und die die aufgegebene Biomasse soweit verwertet, dass nur geringe Volumina an Rückständen verbleiben.

Diese Aufgabe wird durch eine pyrolytische Gaserzeugungsvorrichtung mit den Merkmalen des Anspruchs 1 gelöst.

Die Gaserzeugungsvorrichtung nach der Erfindung ist zur Erzeugung von Synthesegas und/oder Prozesswärme aus einem verkohlbaren Biomasse-Ausgangsstoff geeignet, insbesondere aus Holz, Ölsaaten, Gärsubstrat aus Biogasanlagen, Stallmist, Gülle, Klärschlamm oder anderen kohlenstoffhaltigen Abfällen.

Die erfindungsgemäße pyrolytische Gaserzeugungsvorrichtung ist hinsichtlich des Gedankens der Entsorgung von Bioabfällen optimiert, das heißt, das Reststoffvolumen im Verhältnis zum Aufgabevolumen beträgt weniger als 20%. Es wird auch eine beträchtliche Ausbeute an Synthesegas und Prozesswärme erzeugt, worüber z. B. eine Beheizung von Produktions- und Wohngebäuden oder landwirtschaftlichen Stallungen möglich ist.

Durch die Bauweise ergibt sich eine geringere vertikale Ausdehnung als bei herkömmlichen Holzvergasern. Alle Anlagenteile bleiben einfach zugänglich, und es ist ein kostengünstiger Aufbau gegeben.

Die Erfindung bietet den Vorteil, in dem einmal initiierten Prozess sehr viel Wärme zu erzeugen, wodurch das Ergebnis der Vergasung verbessert wird und zusätzlich Wärme für weitere Nutzungen abgezogen werden kann. Vor allem erfolgt dabei eine so vollständige Verwertung des Ausgangsstoffes, dass nur ein geringes Reststoffvolumen als Asche zurückbleibt.

Die Wärmeausbeute im laufenden Prozess ist so groß, dass sogar Biomasse, die bis zu 20% Restfeuchte enthält, direkt verarbeitet werden kann. Damit können separierte Gülle, Gärreste aus Biogasanlagen oder Klärschlamm entweder direkt verarbeitet werden oder werden durch anfallende Prozesswäre vorgetrocknet. Somit besteht der Vorteil der pyrolytischen Gaserzeugungsvorrichtung nach der Erfindung nicht nur in der Ausbeute an Pyrolyegas und Prozesswärme, sondern insbesondere in der Möglichkeit einer umweltfreundlichen, dezentralen Entsorgung der genannten organischen Reststoffe. Die dezentrale Verarbeitung wird durch den einfachen Aufbau der Gaserzeugungsvorrichtung begünstigt, die nur wenig Stellplatz benötigt und im Betrieb nur sehr wenig elektrische Leistung benötigt, um die langsam laufenden Gebläse und das Förderorgan anzutreiben.

Der einfache Aufbau der Vorrichtung ist auch dadurch gekennzeichnet, dass keine komplizierten Stell- und Regeleinrichtungen erforderlich sind. Erfindungsgemäß gibt es lediglich eine Stellgröße, welche in der Drehzahl der Lüftermotoren besteht, über die Warmluft eingeleitet und Synthesegas ausgeleitet wird. Diese ist so zu justieren, dass im Unterdruckbetrieb gefahren wird. Ggf. kann als Stellglied noch eine manuell oder motorisch betätigbare Klappe vorgesehen sein, um den Gasstrom in der Aufheiz- und Anfahrphase umzuleiten. Ansonsten läuft der Betrieb selbsttätig und störungsfrei.

Die Erfindung beruht auf dem an sich bekannten Prinzip der Verkohlung organischer Ausgangsstoffe aus Biomasse in einem sogenannten Holzvergaser. Darin wird zunächst durch Erwärmung der Ausgangsstoffe in einem vertikal ausgerichteten Reaktor unter Bildung von Holzkohle ein Pyrolysegas erzeugt. Anschließend erfolgt eine weitergehende Verbrennung der Holzkohle in der Wärmeerzeugereinheit. Während aber herkömmliche Holzvergaser zwei übereinander angeordnete Brennkammern für die Pyrolyse und die Nachverbrennung (Oxidation) vorsehen und die Bildung von Holzkohle als Zwischenstadium kaum sichtbar wird, sind diese Prozessstufen bei der erfindungsgemäßen Gaserzeugungsvorrichtung räumlich und funktionell voneinander getrennt.

Dabei erfolgt die Verbindung zwischen dem Vergasermodul und dem Wärmeerzeuger über die Mündung des Vergaserschachts, von wo aus ein Transportorgan die Abförderung der Holzkohle vornimmt.

Der Begriff "Holzkohle" wird bei der Beschreibung der Erfindung zur Charakterisierung des Zwischenprodukts unabhängig davon benutzt, ob Holzpartikel, sonstige Biomasse-Feststoffe oder auch eingedickte Biomasse mit Restfeuchte wie Gülle, Gärreste oder Klärschlamm verkohlt werden.

Bevorzugt wird der vertikal ausgerichtete Vergaserschacht mit einer Wärmeerzeugereinheit kombiniert, die sich über eine große Länge in horizontaler Richtung erstreckt und die ein Förderorgan in Form einer Förderschnecke aufweist. Durch die große Länge eignet sich die Bauweise der Wärmeerzeugereinheit sehr gut, um die im Vergasungsprozess gewonnene Holzkohle langsam und vollständig ausglühen zu lassen.

Für die dabei gewonnene Heißluft besteht darin ein sich über die Länge der Nachglüh- bzw. Wärmeerzeugereinheit erstreckender Heißluftkanal, der zunächst vom Pyrolyseraum getrennt ist und mit diesem erst im oberen Bereich des Vergaserschachts wieder in Verbindung kommt.

Die Erfindung besitzt in der bevorzugten Ausführungsform mit der Schachtvergasereinheit und der Wärmeerzeugereinheit zwei wesentliche Anlagenabschnitte, die im rechten Winkel zueinander angeordnet sind. Dabei kommt es nicht auf eine exakte Rechtwinkligkeit an, auch nicht auf eine genau horizontale und vertikale Ausrichtung des Vergaserschachts oder der Wärmeerzeugereinheit, sondern darauf, dass die beiden genannten Anlagenabschnitte in Bezug auf die Schwerkraft optimal ausgerichtet sind. Im Vergaserschacht ist eine annährend vertikale Ausrichtung erforderlich, damit der aufgegebene Ausgangsstoff im Wesentlichen aufgrund der Gewichtskraft nach unten nachrutscht. In der Wärmeerzeugereinheit hingegen wird eine horizontale oder annähernd horizontale Ausrichtung angestrebt. Dadurch soll die Förderwirkung allein durch die Förderschnecke bewirkt werden. In der Wärmeerzeugereinheit soll über die Länge der Förderschnecke eine möglichst gleichmäßige Verteilung des nachbehandelnden Kokses gegeben sein. Ausbreitung und Förderung des Kokses sollen durch die Förderschnecke und nicht durch den Einfluss der Gewichtskraft bewirkt werden. Weiterhin ist die horizontale Ausrichtung in der Wärmeerzeugereinheit auch in Bezug auf die nach der Erfindung besonders gleichmäßige Zufuhr einer dosierten Sauerstoffmenge wichtig. Hierbei trifft die Frischluft oder ein anderes, Sauerstoff enthaltenes Gasgemisch gleichmäßig auf die Oberfläche in der durch die Förderschnecke ständig umgewälzten Holzkohle.

Die Erfindung wird mit weiteren vorteilhaften Ausgestaltungen nachfolgend anhand eines Ausführungsbeispiels mit Bezug auf die Zeichnungen näher erläutert. Die Figuren zeigen im Einzelnen:
- Fig. 1: eine pyrolytische Gaserzeugungsvorrichtung nach der Erfindung in einer schematischen Schnittdarstellung;
- Fig. 2: einen vertikalen Schnitt durch eine Schachtvergasereinheit; und
- Fig. 3: einen vertikalen Schnitt durch eine Wärmeerzeugereinheit.

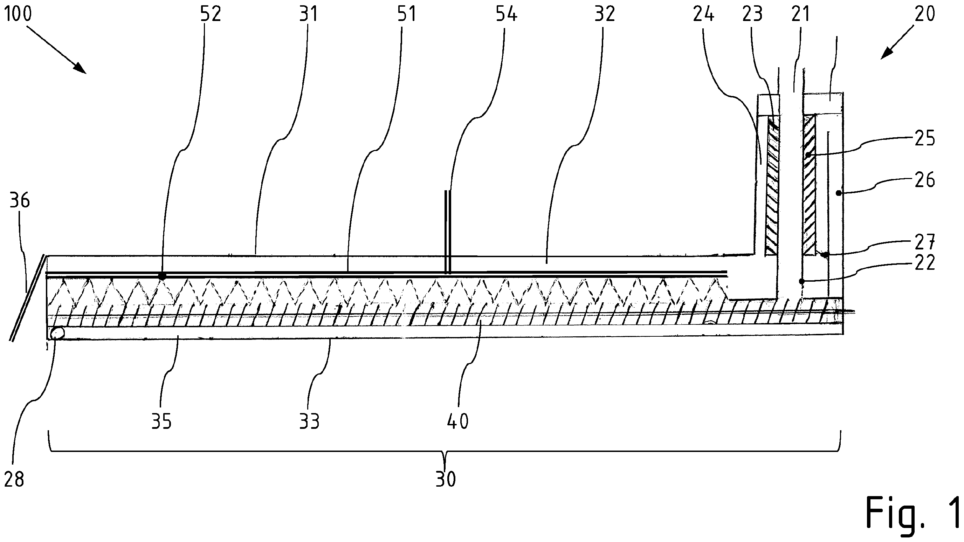

In Figur 1 ist eine pyrolytische Gaserzeugungsvorrichtung 100 im Schnitt dargestellt, die in diesem Bespiel zwei Abschnitte umfasst, nämlich:
- eine vertikal ausgerichtete Schachtvergasereinheit 20 mit einem nach unten offenen Vergaserschacht 21;
- eine Nachglüheinheit als Wärmeerzeugereinheit 30 zur Erzeugung von Heißluft zur Erwärmung des Vergaserschachts 21 mit einer unterhalb des Vergaserschachts 21 angeordneten Förderschnecke 40, die motorisch angetrieben ist und von dem Vergaserschacht 21 abfördert.

Die Förderschnecke 40 ist in einem Gehäuse 31 der Wärmeerzeugereinheit 30 rotierbar gelagert und dabei quer zur Hochachse des Vergaserschachts 21 ausgerichtet. Da das Volumen der geförderten Holzkohle mit zunehmender Behandlung sinkt, nimmt die Steigung der Schneckengänge der Förderschnecke zonenweise oder kontinuierlich ab, so dass ein hoher Füllgrad der Schneckengänge erhalten bleibt. Über die gefüllte Förderschnecke 40 wird eine Abdichtung der Förderschnecke gegenüber einer Auslassöffnung am linken Ende des Gehäuses 31 der Wärmeerzeugereinheit 30 bewirkt. Eine Klappe 36 am Ende der Förderschnecke 40 verschließt kontrolliert den Schacht, auch beim Anfahren. Die Klappe 36 wird aufgedrückt, wenn die Förderschnecke 40 abfördert.

In dem Gehäuse 31 ist unterhalb der Förderschnecke 40 ein geschlossener Boden 33 vorgesehen. Oberhalb der Förderschnecke 40 ist wenigstens ein Frischgasinjektorrohr 51 zur Injektion von Sauerstoff, Luft oder anderen sauerstoffhaltigen Gasgemischen angeordnet. Das Frischgasinjektorrohr 51 wird von einem Gebläse über eine Luftleitung 54 gespeist. Der Luftaustritt erfolgt über eine Reihe von Auslassöffnungen 52 am Frischgasinjektorrohr 51, die an der der Förderschnecke 40 zugewandten Unterseite angeordnet sind. Das Frischgasinjektorrohr 51 erstreckt sich von der Umgebung des Vergaserschachts 21 aus über einen überwiegenden Teil der Länge der Förderschnecke 40 bis zu dem in Fig. 1 linken Endbereich des Gehäuses 31. Der Durchmesser der Auslassöffnungen 52 ist mit etwa 2,5 mm relativ klein gewählt. Dadurch wird die in den Schneckengängen der Förderschnecke 40 offen liegende Holzkohle sehr gleichmäßig mit einem Hauch von Frischluft beaufschlagt.

Aus zwei Gründen wird wenig Sauerstoff wie möglich eingeblasen:
- In der Wärmeerzeugereinheit 30 soll die Holzkohle kontrolliert ausglühen und nicht verbrennen. Dadurch bleibt am Ende des Prozesses nur eine geringe Menge an Reststoffen übrig und die Temperatur in der Wärmeerzeugereinheit 30 ist kontrollierbar.
- Außerdem wird die Frischluft dort in die Wärmeerzeugereinheit durch den Raum oberhalb der Transortschnecke eingeblasen, aus welchem zugleich die Warmluft abgezogen wird, die zum Vergaserschacht geleitet wird. Gerade im Vergaserschacht soll aber nur weitgehend sauerstoffreduziertes Gas zur Erwärmung der aufgegebenen Biomasse eingesetzt werden, um dort eine hohe Gasausbeute zu erzielen und eine Verbrennung an dieser Stelle zu vermeiden. Die hier bei der Erläuterung der Erfindung verwendete Bezeichnung "Warmluft" kennzeichnet also nur ein erwärmtes Gasgemisch von unbestimmter Zusammensetzung, wobei Art und Anteile der Gasanteile von Frischluft deutlich abweichen können.

Zwischen dem Boden 33 des Gehäuses 31 der Wärmeerzeugereinheit 30 und einer Wanne, die den unteren Teil der Förderschnecke 40 umgibt, ist ein Hohlraum 35 ausgebildet, der als Verlängerung des Synthesegasabzugskanals 26 nutzbar ist. Das Synthesegas wird dann entlang der Wärmeerzeugereinheit 30 geleitet. Das etwa 200°C heiße Gase wird in dem Kanal 26 nach hinten gezogen und dabei auf ca. 100°C abgekühlt. Die Temperaturdifferenz von etwa 100°C wird durch Abgabe von Wärme an einen externen Prozess.

Bei der Schachtvergasereinheit 20 ist der Vergaserschacht 21 in einem Teilbereich des Umfangs seiner Wandung 22 von einem Heißluftkanal 24 umgeben ist. Der Heißluftkanal 24 steht über wenigstens eine Gasdurchlassöffnung 23 mit dem Vergaserschacht 21 in Verbindung. Auf der gegenüberliegenden Seite am Vergaserschacht 21 ist die Wandung 22 in zumindest einem weiteren Teilbereich ebenfalls mit wenigstens einer Gasdurchlassöffnung 25 versehen, an die sich ein Synthesegasabzugskanal 26 anschließt.

Bei der dargestellten Ausführungsform besitzt der Vergaserschacht 21 einen rechteckigen Querschnitt, wobei doppelwandige Bereiche gegenüberliegenden Seiten ausgebildet sind. In dem einen Wandbereich wird die Heißluft zugeführt und gelangt über mehrere Durchlassöffnungen 23 in das Innere des Vergaserschachtes 21, wo das darin befindliche Schüttgut erhitzt wird und der Verkokungsprozess stattfindet. An der gegenüberliegenden Seite sind ebenfalls Durchlassöffnungen 25 vorhanden, durch welche das entstehende Synthesegas abgezogen wird.

In dem Höhenabschnitt des Vergaserschachtes 21, in dem sich die doppelwandigen Bereiche gegenüber liegen, wird die Wandung 22 durch ein- und abströmende Gase in etwa gleichmäßig erwärmt. Weiter unten hingegen können starke Temperaturunterschiede auftreten, die in unterschiedlichen Wärmedehnungen in der Wandung und damit zum Verzug des Vergaserschachtes 21 führen. Daher ist vorzugsweise vorgesehen, die von der Heißluft durchströmte Zone auf weitere Umfangsbereiche auszudehnen oder sogar vollumfänglich auszubilden, damit vermieden wird, dass sich der Vergaserschacht 21 im Betrieb durch unterschiedliche Wärmedehnungen verzieht.

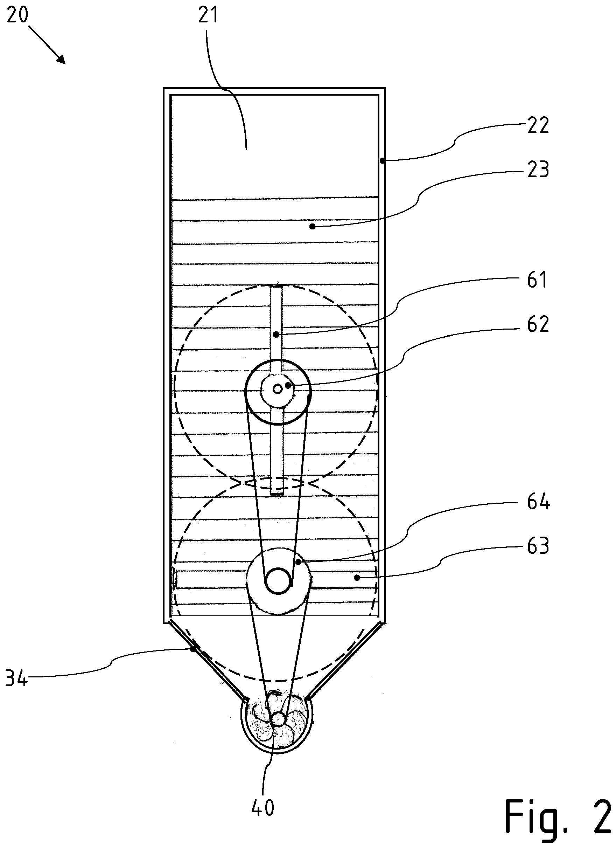

Figur 2 zeigt einen vertikalen Schnitt durch die Schachtvergasereinheit 20 mit dem von der Wandung 22 eingefassten Vergaserschacht 21. Im Hintergrund sind die lamellenförmig ausgebildeten Gasdurchlassöffnungen 23 erkennbar. Der Vergaserschacht 21 ist im unteren Bereich trichterförmig zulaufend ausgebildet, damit das verkokte Gut direkt in den Einzugsbereich der Förderschnecke 40 gelangen kann.

Im unteren, trichterförmigen Bereich 34 ist die rotierende Förderschnecke 40 angeordnet. Im Vergaserschacht 21 darüber sind zwei angetriebene Rotorelemente 61, 63 angeordnet. Das untere Rotorelement 63 ist derart gestaltet und angeordnet, dass es mit den Spitzen seiner Rotorflügel nah an der Wandung 22 wie auch an der Oberkante der rotierenden Förderschnecke 40 entlang streicht.

Der als gestrichelte Kreislinie markierte Wirkungsbereich der Rotorflügel des oberen Rotorelements 61 überlappt mit dem des unteren Rotorelements, so dass über einen wesentlichen Teil der Höhe des Vergaserschachts 21 eine gleichmäßige Fließgeschwindigkeit des aufgegebenen Feststoffs durch den Vergaserschacht und damit eine über die Zeit gleichmäßige Gasausbeute erreicht wird.

Wesentlich ist noch die Ausbildung der beiden Rotorelemente in Bezug auf das Verhältnis von Achsdurchmesser zu Rotorflügellänge. Das untere Rotorelement 63 besitzt eine Achse 64 mit deutlich größerem Durchmesser und kürzeren Flügeln als bei dem oberen Rotorelement 62. Mit dem oberen Rotorelement 61 wird erreicht, dass das verkokte Schüttgut möglichst ungehindert nach unten durchrutschen kann und dabei aufgelockert wird. Mit dem unteren Rotorelement 63 wird aufgrund der sehr dick ausgebildeten Achse, deren Durchmesser etwas ein Drittel der Breite im Vergaserschacht 21 beträgt, das Schüttgut zu den beiden Seitenwänden hin aufgeteilt, wo es wiederum von den Rotorflügeln 64 erfasst werden kann. Eine Brückenbildung des Schüttguts in der Mitte des Vergaserschachts 21 wird vermieden und ein gleichmäßiges Fließen des Feststoffs sichergestellt.

Die Koks- bzw. Holzkohle wird über die Förderschnecke 40 in die Wärmeerzeugereinheit gefördert, wobei es in den Schneckengängen großflächig ausgebreitet ist.

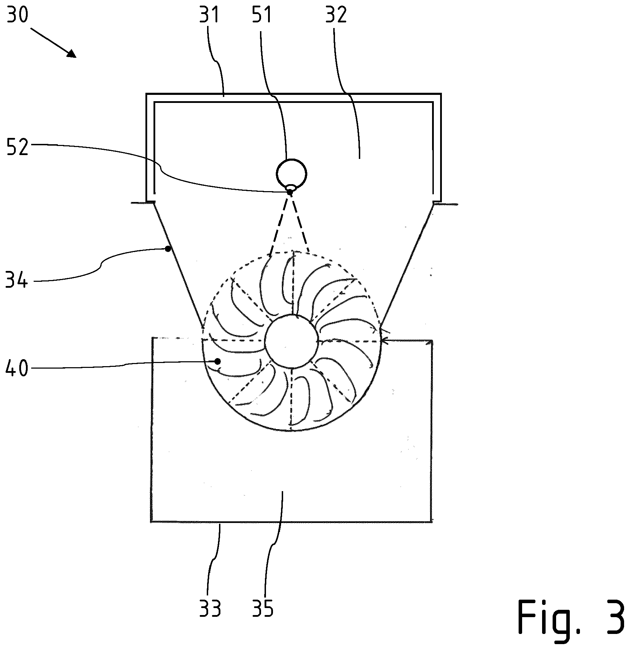

Figur 3 zeigt die Wärmeerzeugereinheit 30 im Schnitt. Von der Förderschnecke 40 ausgehend erweitert sich das Gehäuse 31 über schräge Seitenwände 34, um eine breite Auffächerung des Schüttguts zu ermöglichen, sodass dieses optimal ausgebreitet für den Einwirkungsbereich der Frischluftzufuhr ist. Von der Förderschnecke 40 aufgeworfene Schüttgutteile werden durch die schräg stehenden Seitenwände 34 immer wieder in den Zentralbereich zurückgeführt. Oberhalb davon ist ein erweiterter Aufnahmeraum ausgebildet, der Teil des Heißluftkanals 32 ist. Darin ist das Frischluftinjektorrohr 51 angeordnet, aus dessen Auslassöffnungen 52 Frischgas strömt.

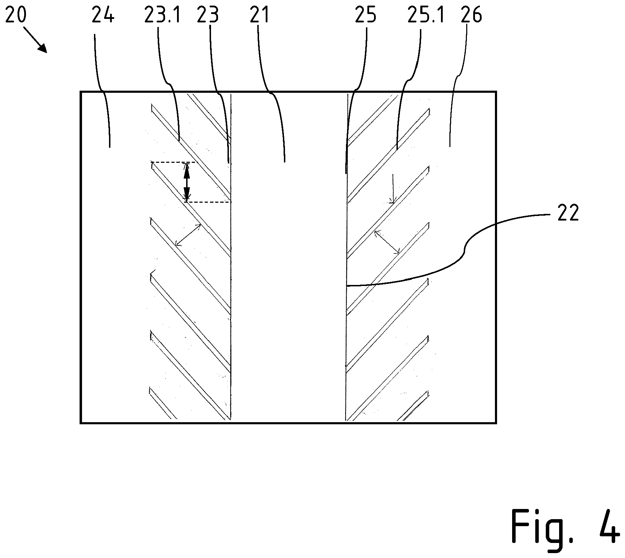

Figur 4 zeigt einen Ausschnitt eines vertikalen Schnitts durch den Vergaserschacht 21, wobei die Schnittebene im Vergleich zu Fig. 2 um 90° gedreht ist. Die Gasströmung erfolgt von dem Heißluftkanal 24 links durch die Gasdurchlassöffnungen 23 in den Vergaserschacht 21 und von dort durch die Gasdurchlassöffnungen 25 zu dem Synthesegasabzugskanal 26 rechts. Die Gasdurchlassöffnungen 23, 25 sind jeweils als horizontale Schlitze ausgebildet sind, wobei mehrere Gasdurchlassöffnungen 23, 25 übereinander angeordnet. Zwischen benachbarten Gasdurchlassöffnungen 23, 25 ist jeweils ein Lamellensteg 23.1, 25.1 angeordnet, der sich von der Wandung 22 aus, welche den Vergasersteg begrenzt, schräg nach oben erstreckt. Bei dem dargestellten Ausführungsbeispiel wurde eine besondere Geometrie der Lamellenstege 23.1, 25.1 gewählt. Dabei erstreckt sich jeweils die zu dem Gaskanal 24, 26 weisende Außenkante des Lamellenstegs 23.1, 25.1 bis oberhalb der Verbindungslinie eines darüber liegenden Lamellenstegs 23.1, 25.1 mit der Wandung 22 wie durch den vertikalen Maßpfeil angeordnet. Diese Ausbildung hat den Vorteil, dass trotz der im Vergaserschacht 21 rotierenden Rotorelemente kein Feststoff aus den Gasdurchlassöffnungen 23, 25 herausgedrückt wird. Etwaig zwischen benachbarte Lamellensteg gelangte Feststoffpartikel rutschen in den Vergaserschacht 21 zurück. Auch das Verschleppen von Staubanteilen in den Abzugskanal 26 für das Synthesegas wird dadurch gemindert oder sogar ganz verhindert.

Beispielhaft sind die Maße wie folgt gewählt:
- Der Vergaserschacht 21 besitzt eine lichte Breite von 100 mm.
- Die Lamellenstege 23.1, 25.1 besitzen eine Blechstärke von 4 mm und eine Länge von 500 mm bei einer Breite von 100 mm.
- Die Lamellenstege 23.1, 25.1 sind parallel mit einem Abstand von 30 mm zueinander angeordnet.
- Zwischen dem Ansatzpunkt eines Lamellenstegs an der Wandung 22 und den Endpunkt eines benachbarten Lamellenstegs liegt eine Höhendifferenz von 30 mm.
- Die unter dem Vergaserschacht positionierte Förderschnecke besitzt einen Durchmesser von 160 mm und eine Steigung von 100mm, die im weiteren Verlauf der etwa 6m langen Förderschnecke reduziert ist.

Ein leichter Unterdruck in diesem Bereich verhindert das Entrinnen der Gase nach oben.

Nachfolgend wird der Betrieb der pyrolytischen Gaserzeugungsvorrichtung 100 nach der Erfindung beschrieben.

Als Ausgangsstoff wird ein fließ- oder rieselfähiger organischer Reststoff gewählt. Dabei kann es sich beispielsweise um Holz- oder Hühnerkotpellets mit einer Korngröße von 6mm bis 10 mm handeln. Klärschlämme, Gülle oder Gärreste aus Biogasanlagen können verarbeitet werden, wenn sie auf einen Trockenstoffgehalt von 80% bis 95% vorgetrocknet worden sind. Dazu kann die vorübergehend Prozesswärme oder ansonsten die Abwärme aus einem nachgeschalteten Prozess wie etwas dem Betrieb eines Blockheizkraftwerks, in dem das Synthesegas verbrannt wird, benutzt werden.

Der Feststoff wird im Kopfbereich des Vergaserschachts 21 aufgegeben, z. B. über eine Zellradschleuse. Wie bei Holzvergasern üblich, muss eine zu starke Frischluftzufuhr im Bereich der Aufgabestelle unterbunden werden. Das im Kopfbereich aufgegebene und vorerwärmte Schüttgut rutscht im Vergaserschacht nach unten, wobei die Rotoren 61, 63 (vgl. Fig. 2) für eine gleichmäßige Fließgeschwindigkeit sorgen. Es gelangt in die Förderschnecke 40 und wird über diese in die Wärmeerzeugereinheit 30 verbracht, wo es z. B. mit einer Gasflamme entzündet wird. Die Kammern in der Förderschnecke 40 sind zu diesem Zeitpunkt erst zu 25% bis 50% gefüllt. In dieser Phase kann die Frischluftzufuhr noch gegenüber dem späteren Betrieb erhöht sein. Durch die Verbrennung steigt heiße Luft in den Heißluftkanal 32 auf.

Die in der Wärmeerzeugereinheit 30 erzeugte Heißluft, die neben Luft auch weitere nutzbare Gase enthalten kann, strömt durch einen Heißluftkanal 32 im Gehäuse 31 in den Heißluftkanal 24, der an die Wandung 22 des Vergaserschachts 21 angrenzt. Der Heißluftkanal 24 erstreckt sich bis in einen Kopfbereich des Vergaserschachts 21, sodass der Ausgangsstoff direkt bei der Aufgabe in den Vergaserschacht 21 erwärmt wird.

Über eine Klappe 27 kann beim Anfahren vorübergehend eine Verbindung zwischen dem Heißluftkanal 32 und dem Synthesegasabzugskanal 26 hergestellt werden. Dadurch kann die Heißluft auch an der anderen Seite des Vergaserschachts 21 aufsteigen und diesen erwärmen.

Mit zunehmender Erwärmung des aufgegebenen Stoffes im Vergaserschacht 21 setzt bei etwa 500°C bis 600°C der Pyrolyseprozess ein. Dann wird der Weg über die Klappe 27 wieder versperrt, so dass die Heißluft wie beschrieben nur einseitig im Heißluftkanal 24 aufsteigt und das entstehende Synthesegas an der gegenüberliegenden Seite über den Kanal 26 abgezogen wird. Nach dem Anfahrprozess ist es bei der Verfahrensführung bei der Gaserzeugungsvorrichtung 100 wichtig, dass nur ein sehr kleiner Volumenstrom an Luft oder anderen Frischgasen der Wärmeerzeugereinheit 30 zugeführt wird, welcher sich aber vollflächig ausbreitet. Die gestrichelten Linien in Fig. 1 kennzeichnen den jeweiligen Einflusskegel der Luftströmung zwischen dem Austritt an einer Auslassöffnung 52 und dem Auftreffen auf dem Holzkohlebett an der Oberseite der Förderschnecke 40.

Bei den Auslassöffnungen 52 am Frischluftinjektorrohr 51 sind der Durchmesser, der axiale Abstand untereinander sowie der vertikale Abstand zur Förderschnecke 40 so mit dem Luftvolumenstrom abgestimmt, dass das Holzkohlebett laminar und vollflächig angeströmt wird. Dadurch glüht die Holzkohle gleichmäßig durch.

Auch der daraus generierte Heißluftstrom ist gebremst, indem im Synthesegaskanal 26 ein mit niedriger Drehzahl laufendes Gebläse angeschlossen wird, um das Synthesegas abzuziehen. Dadurch wird auch die Querströmung durch die Gasdurchlassöffnungen 23, 25 und den Schacht 21 beeinflusst, die sich wiederum über den Heißluftkanal 24 bis in die Wärmeerzeugereinheit 30 auswirkt. Durch die geringe Strömungsgeschwindigkeit wird kaum Asche aufgewirbelt und mit dem Synthesegas abgezogen. Vielmehr wirkt die Bauweise des Vergaserschachts mit dem horizontal durchströmten Feststoffbett zusätzlich also Filter für die durchgeleitete Warmluft.

Über das Frischluftinjektorrohr wird also in sehr dosierter Form Frischluft oder ein anderes, Sauerstoff enthaltendes Gas zugeführt, um die Holzkohle vollständig durchzuglühen und die Wärmeausbeute zu erhöhen. Die Frischluft wird mit einem sehr niedrigen Differenzdruck zugeführt. Beispielsweise ist hierzu ein langsam laufender Lüfter vorgesehen. Die dosierte Luftzufuhr ist erfindungswesentlich, weil eine schnelle Verbrennung des Kokses vermieden werden soll. Es soll vielmehr ein über die Länge der Wärmeerzeugereinheit kontinuierlichen Prozess erzielt werden, durch den möglichst alle oxidationsfähigen Reste beseitigt werden, sodass am Ende der Förderschnecke nur noch Asche ausgestoßen wird.

Die Asche enthält noch sehr wenige organische Restbestandteile, enthält aber insbesondere aber noch alle für eine Weiterverwertung nutzbaren anorganischen Stoffe, sodass die Asche z. B. als land- und gartenwirtschaftlicher Dünger weiterverwendbar ist. Wird beispielsweise Gülle oder Stallmist mit der Pyrolysevorrichtung behandelt, werden neben dem Synthesegas und der Wärmeausbeute auch noch Phosphate und andere Stoffe, die bei der freien Ausbringung von Gülle und Mist für das Grundwasser problematisch sind, in konzentrierter Weise und direkt weiter verwertbarer Form erhalten.

## Patentansprüche

1. Pyrolytische Gaserzeugungsvorrichtung (100) zur Erzeugung von Synthesegas aus einem verkohlbaren Ausgangsstoff, wenigstens umfassend:
- eine vertikal ausgerichtete Schachtvergasereinheit (20) mit einem nach unten offenen Vergaserschacht (21);
- eine Wärmeerzeugereinheit (30) zur Erwärmung des Vergaserschachts (21) und
- eine unterhalb des Vergaserschachts (21) angeordnete Austragseinheit mit wenigstens einem motorisch angetriebenen, von dem Vergaserschacht (21) abfördernden Förderorgan in Form einer Förderschnecke (40);
wobei:
- der Vergaserschacht (21) in einem Teilbereich des Umfangs seiner Wandung (22) von einem von dem Wärmeerzeuger (30) gespeisten Heißluftkanal (24) umgeben ist, welcher über wenigstens eine Gasdurchlassöffnung (23) mit dem Vergaserschacht (21) in Verbindung steht,
- die Wandung (22) in zumindest einem weiteren Teilbereich mit wenigstens einer Gasdurchlassöffnung (25) versehen ist, an die sich ein Synthesegasabzugskanal (26) anschließt;
- der Vergaserschacht (21) im Querschnitt rechteckig ausgebildet ist und die Gasdurchlassöffnungen (23, 25) für den Synthesegasabzugskanal (26) und den Heißluftkanal (24) an parallelen gegenüberliegenden Seiten des Vergaserschachts (21) angeordnet sind
**dadurch gekennzeichnet,**
- **dass** mehrere Gasdurchlassöffnungen (23, 25) übereinander angeordnet sind und zwischen benachbarten Gasdurchlassöffnungen (23, 25) jeweils ein Lamellensteg (23.1, 25.1) angeordnet ist, der sich von der Wandung (22) aus schräg nach oben erstreckt; und
- **dass** in dem Vergaserschacht (21) wenigstens ein Rotorelement (61, 63) mit wenigstens einem Rotorflügel derart angeordnet ist, dass der Rotorflügel (61) bis an die Wandung (22) und an die Förderschnecke (40) heranreicht.

2. Gaserzeugungsvorrichtung (100) nach Anspruch 1, **dadurch gekennzeichnet, dass** sich die Außenkante eines unteren Lamellenstegs bis oberhalb der Verbindungslinie eines darüber liegenden Lamellenstegs (23.1, 25.1) mit der Wandung (22) des Vergaserschachts (21) erstreckt.

3. Gaserzeugungsvorrichtung (100) nach Anspruch 1 oder 2, **dadurch gekennzeichnet, dass** die Gasdurchlassöffnungen (23, 25) jeweils als horizontale Schlitze ausgebildet sind.

4. Gaserzeugungsvorrichtung (100) nach einem der vorhergehenden Ansprüche, **dadurch gekennzeichnet, dass** das Rotorelement (63) ein zentrales Achselement (64) besitzt, an dessen Außenumfang sich die Flügel anschließen, wobei der Durchmesser des Achselements (64) wenigstens 25% der lichten Weite im Vergaserschacht (21) beträgt.

5. Gaserzeugungsvorrichtung (100) nach einem der vorhergehenden Ansprüche, **dadurch gekennzeichnet,**
- **dass** das Förderorgan eine Förderschnecke (40) ist, die quer zur Hochachse des Vergaserschachts (21) ausgerichtet ist und die die Wärmeerzeugereinheit (30) durchläuft;
- **dass** oberhalb der Förderschnecke (40) wenigstens ein Frischgasinjektorrohr (51) zur Injektion von Sauerstoff, Luft oder anderen sauerstoffhaltigen Gasgemischen angeordnet ist, das:
- mit einem Gebläse verbunden ist,
- sich von der Umgebung des Vergaserschachts (21) aus über einen überwiegenden Teil der Länge der Förderschnecke (40) erstreckt, und
- an seiner der Förderschnecke (40) zugewandten Unterseite wenigstens eine Reihe von Auslassöffnungen (52) aufweist.

## Claims

1. Pyrolytic gas generating device (100) for generating synthesis gas from a carbonizable feedstock, at least comprising:
- a vertically oriented shaft gasifier unit (20) having a downwardly open gasifier shaft (21);
- a heat generator unit (30) for heating the gasifier shaft (21), and
- a discharge unit which is arranged below the gasifier shaft (21) and has at least one motor-driven conveying member in the form of a conveying screw (40) which provides conveyance away from the gasifier shaft (21);
wherein:
- the gasifier shaft (21) is surrounded in a subregion of the periphery of its wall (22) by a hot air duct (24) which is fed by the heat generator (30) and is connected via at least one gas passage opening (23) to the gasifier shaft (21),
- the wall (22) is provided in at least one further subregion with at least one gas passage opening (25) adjoined by a synthesis gas extractor duct (26) ;
- the gasifier shaft (21) is rectangular in cross section and the gas passage openings (23, 25) for the synthesis gas extractor duct (26) and the hot air duct (24) are arranged on parallel opposite sides of the gasifier shaft (21),
**characterized**
- **in that** multiple gas passage openings (23, 25) are arranged one above the other and a respective louvre (23.1, 25.1) is arranged between adjacent gas passage openings (23, 25) and extends obliquely upwards from the wall (22); and
- **in that** at least one rotor element (61, 63) having at least one rotor blade is arranged in the gasifier shaft (21) in such a way that the rotor blade (61) reaches the wall (22) and the conveying screw (40).

2. Gas generating device (100) according to Claim 1, **characterized in that** the outer edge of a lower louvre extends to above the connecting line between a louvre (23.1, 25.1) located thereabove and the wall (22) of the gasifier shaft (21).

3. Gas generating device (100) according to Claim 1 or 2, **characterized in that** the gas passage openings (23, 25) are each in the form of horizontal slots.

4. Gas generating device (100) according to one of the preceding claims, **characterized in that** the rotor element (63) has a central axle element (64), the outer periphery of which is adjoined by the blades, wherein the diameter of the axle element (64) is at least 25% of the clear width in the gasifier shaft (21).

5. Gas generating device (100) according to one of the preceding claims, **characterized**
- **in that** the conveying member is a conveying screw (40) which is oriented transversely with respect to the vertical axis of the gasifier shaft (21) and runs through the heat generator unit (30);
- **in that** at least one fresh gas injector tube (51) for injecting oxygen, air or other oxygen-containing gas mixtures is arranged above the conveying screw (40), said at least one fresh gas injector tube:
- being connected to a blower,
- extending from the environment of the gasifier shaft (21) over a predominant part of the length of the conveying screw (40), and
- having at least one row of outlet openings (52) on its bottom side facing towards the conveying screw (40).

## Revendications

1. Dispositif de production de gaz pyrolytique (100) pour la production de gaz de synthèse à partir d'une matière première carbonisable, comprenant au moins :
- une unité de gazéification à puits (20) orientée verticalement avec un puits de gazéification (21) ouvert vers le bas ;
- une unité de production de chaleur (30) pour chauffer le puits de gazéification (21) et
- une unité de déchargement agencée en dessous du puits de gazéification (21) avec au moins un organe de transport sous la forme d'une vis sans fin de transport (40), entraîné par moteur, sortant du puits de gazéification (21) ;
- le puits de gazéification (21) étant entouré, dans une zone partielle de la périphérie de sa paroi (22), par un canal d'air chaud (24) alimenté par le producteur de chaleur (30), qui est en liaison avec le puits de gazéification (21) par l'intermédiaire d'au moins une ouverture de passage de gaz (23),
- la paroi (22) étant pourvue, dans au moins une autre zone partielle, d'au moins une ouverture de passage de gaz (25) à laquelle se raccorde un canal d'évacuation de gaz de synthèse (26) ;
- le puits de gazéification (21) étant configuré à section transversale rectangulaire et les ouvertures de passage de gaz (23, 25) pour le canal d'évacuation de gaz de synthèse (26) et le canal d'air chaud (24) étant agencées sur des côtés opposés parallèles du puits de gazéification (21),
**caractérisé en ce que**
- plusieurs ouvertures de passage de gaz (23, 25) sont agencées les unes au-dessus des autres et, entre des ouvertures de passage de gaz (23, 25) voisines, est agencée à chaque fois une entretoise en lamelle (23.1, 25.1) qui s'étend en oblique vers le haut à partir de la paroi (22) ; et
- dans le puits de gazéification (21) est agencé au moins un élément de rotor (61, 63) avec au moins une pale de rotor de telle sorte que la pale de rotor (61) s'étend jusqu'à la paroi (22) et jusqu'à la vis sans fin de transport (40).

2. Dispositif de production de gaz (100) selon la revendication 1, **caractérisé en ce que** le bord extérieur d'une entretoise en lamelle inférieure s'étend jusqu'au-dessus de la ligne de liaison d'une entretoise en lamelle (23.1, 25.1) située au-dessus avec la paroi (22) du puits de gazéification (21).

3. Dispositif de production de gaz (100) selon la revendication 1 ou 2, **caractérisé en ce que** les ouvertures de passage de gaz (23, 25) sont chacune configurées sous forme de fentes horizontales.

4. Dispositif de production de gaz (100) selon l'une quelconque des revendications précédentes, **caractérisé en ce que** l'élément de rotor (63) possède un élément d'axe central (64), à la périphérie extérieure duquel se raccordent les pales, le diamètre de l'élément d'axe (64) représentant au moins 25 % de la largeur libre dans le puits de gazéification (21).

5. Dispositif de production de gaz (100) selon l'une quelconque des revendications précédentes, **caractérisé en ce que**
- l'organe de transport est une vis sans fin de transport (40) qui est orientée transversalement à l'axe vertical du puits de gazéification (21) et qui traverse l'unité de production de chaleur (30) ;
- au-dessus de la vis sans fin de transport (40) est agencé au moins un tube d'injection de gaz frais (51) pour l'injection d'oxygène, d'air ou d'autres mélanges gazeux contenant de l'oxygène, qui :
- est relié à une soufflante,
- s'étend depuis l'environnement du puits de gazéification (21) sur la majeure partie de la longueur de la vis sans fin de transport (40), et
- présente, sur son côté inférieur tourné vers la vis sans fin de transport (40), au moins une rangée d'ouvertures de sortie (52).
